Europäisches Patentamt

European Patent Office

Office européen des brevets

(19)

(11) Veröffentlichungsnummer : **0 113 477**
**B1**

(12) # EUROPÄISCHE PATENTSCHRIFT

(45) Veröffentlichungstag der Patentschrift :
**25.03.87**

(51) Int. Cl.⁴ : **F 24 D   3/14**

(21) Anmeldenummer : **83113027.3**

(22) Anmeldetag : **23.12.83**

---

(54) **Flüssigkeitsflächenheizung für Fussböden.**

---

(30) Priorität : **11.01.83 DE 3300607**

(43) Veröffentlichungstag der Anmeldung :
**18.07.84 Patentblatt 84/29**

(45) Bekanntmachung des Hinweises auf die Patenterteilung : **25.03.87 Patentblatt 87/13**

(84) Benannte Vertragsstaaten :
**AT BE CH FR GB IT LI NL**

(56) Entgegenhaltungen :
**DE-A- 2 926 685**
**DE-A- 3 037 339**
**FR-A- 2 201 447**
**US-A- 4 338 994**

(73) Patentinhaber : **Lutz, Hans, Dr.-Ing.**
**Berggasse 122**
**D-7410 Reutlingen 7 (DE)**

(72) Erfinder : **Lutz, Hans, Dr.-Ing.**
**Berggasse 122**
**D-7410 Reutlingen 7 (DE)**

(74) Vertreter : **Möbus, Rudolf, Dipl.-Ing.**
**Hindenburgstrasse 65**
**D-7410 Reutlingen (DE)**

EP 0 113 477 B1

## Beschreibung

Die Erfindung betrifft eine Flüssigkeitsflächenheizung für Fußböden mit bifilar oder mäanderförmig verlegten Heizrohren, die in offen und mit Estrich ausfüllbaren konkaven Kanälen von aus wärmeisolierendem Material vorgefertigten Elementen so verlegt sind, daß sie unterhalb der oberen Abschlußebene der Elemente verlaufen.

Eine Flüssigkeitsflächenheizung mit den vorstehend genannten Merkmalen ist beispielsweise aus der DE-B-2 248 228 des gleichen Erfinders bekannt. Auch die DE-A-2 926 685 zeigt ein vorgefertigtes Bodenelement für Fußbodenheizungen mit den obengenannten Merkmalen. Bei diesen bekannten Flüssigkeitsflächenheizungen wird die Wärme von den Heizrohren über Wärmeleitbleche auf den nachträglich aufgebrachten Fußbodenestrich übertragen. Der konkave Querschnitt der zur Aufnahme der Rohre dienenden Rinne ist bei dem vorgefertigten Bodenelement nach der DE-A-2 926 685 ausschließlich unter dem Gesichtspunkt der einfachen und kostensparenden Verformung der den Rinnenboden bildenden Metallfläche gewählt worden, gegen welche sich Kunststoffrohre möglichst dicht anliegen sollen. Die stark gestiegenen Baukosten machen es forderlich, den Konstruktionsaufwand bei Fußbodenheizungen zu verringern. Man ist daher bereits dazu übergegangen, die weitgehend aus Kunststoffmaterial bestehenden Heizrohre unmittelbar und ohne Wärmeverteilerbleche im Estrich zu verlegen. Hierbei ergeben sich jedoch erhebliche Probleme sowohl beim Verlegen als auch nach der Fertigstellung der Fußbodenheizung. Aus der US-A-4 338 994 ist es bekannt, die Heizrohre auf Klemmhaltern mit Abstand über einer Isolationsgrundschicht anzuorden und anschließend den wärmeverteilenden Estrich aufzugießen, so daß die Heizrohre anschließend in den Estrichbelag eingeschlossen sind.

Dies bedeutet aber, daß die Heizrohre nach dem Verlegen und Befestigen in den Klemmhaltern frei über der Wärmedämmschicht liegen, die von den Arbeitern als Trittfläche benutzt werden muß. Dabei ist es unausbleiblich, daß installierte Heizrohre von den Arbeitern niedergetreten, zur Seite geschoben, aufgebogen oder aus den Klipsen gerissen werden, mit dem Ergebnis, daß die Heizrohre nicht mehr in dem erforderlichen gleichmäßigen Abstand voneinander und von der Oberseite des Estrichbodens verlaufen und dadurch unterschiedliche Estrichtemperaturen auftreten. Nach kurzer Zeit bilden sich dadurch Risse im Estrich, die von der Oberfläche der Estrichschicht bis zu den Heizrohren reichen. Wegen der Gefahr der Rißbildung im Estrich unter dem Einfluß der an den Heizrohren auftretenden Wärmeschwankungen muß ohnehin die Estrichschicht eine Mindeststärke von 45 mm oberhalb der Heizrohre aufweisen (lt. Merkblatt des Zentralverbandes des deutschen Baugewerbes). Bei von einer Grundfläche abgehobenen Heizrohren bedeutet dies zwangsläufig, daß die Estrichschicht eine größere Dicke als üblich und aus Festigkeitsgründen erforderlich erhalten muß. Mit zunehmender Masse der Estrichschicht wird diese Fußbodenschicht aber regelungstechnisch träger in bezug auf die gewünschte Wärmeübertragung von den Heizrohren auf die Oberseite des Fußbodens.

Der Erfindung liegt die Aufgabe zugrunde, eine Flüssigkeitsflächenheizung so auszubilden, daß Wärmeleitbleche als Wärmeübertragungshilfen entfallen können, trotzdem aber eine gute Wärmeverteilung über die gesamte Bodenfläche erreichbar ist, ohne daß deshalb die Masse der Fußboden-Estrichschicht merklich erhöht werden muß.

Die gestellte Aufgabe wird bei einer Flüssigkeitsflächenheizung der eingangs genannten Art erfindungsgemäß dadurch gelöst, daß die mit einem konkav gekrümmten Boden versehenen Kanäle als wärmeleitblechfreie Mulden ausgebildet sind, deren Breite größer ist als die Breite der zwischen den Mulden verbleibenden Längsstege, und daß die Heizrohre in den Kanälen auf in den Elementen verankerten Stützen in an sich bekannter Weise mit Abstand vom Muldenboden und vom Estrich allseitig umschließbar gehalten sind.

Bei der erfindungsgemäß ausgebildeten Flüssigkeitsflächenheizung liegen die Heizrohre in der wärmeisolierenden Fußbodenschicht also versenkt, so daß die Arbeiter nach dem Verlegen über die Fußbodengrundschicht gehen können, ohne daß die Gefahr besteht, daß sie an einem Heizrohr hängenbleiben und es über die obere Abschlußebene dieser wärmeisolierenden Fußbodenschicht hochbiegen. Durch die breite Ausgestaltung der Mulden ist zusätzlich sichergestellt, daß der Estrich die Heizrohre ohne die Bildung von Estrichkanten umschließt, entlang welcher der Estrich bevorzugt reißen könnte. Außerdem wird durch die konkave Krümmung des Bodens und das Schmalhalten der zwischen den Mulden verbleibenden, aus wärmeisolierendem Material bestehenden Längsstege eine sehr günstige Wärmeverteilung im Estrich durch Wärmeabstrahlung von den Rohren und eine Wärmereflektion am Muldenboden trotz fehlender metallischer Wärmeverteilungsbleche erreicht. Die Estrichschicht kann nach wie vor eine relativ geringe Dicke und damit eine relativ geringe Masse aufweisen, da sie nur im Bereich der Mulden die oberhalb der Heizrohre geforderte Mindeststärke aufweisen muß, in den Bereichen zwischen den Mulden der die wärmeisolierende Fußbodenschicht bildenden Elemente aber eine geringere Dicke aufweisen kann. Der Estrichbelag ist in bezug auf die Wärmeübertragungsgeschwindigkeit wenig träge, so daß die Flüssigkeitsflächenheizung mit den direkt im Estrich verlegten Heizrohren gute und völlig zufriedenstellende Heizeigenschaften entwickelt, insbesondere in Verbindung mit modernen Estrichmaterialien, die durch Zusätze eine erhöhte Wärmeleitfähigkeit und Plastizität des Estrichmörtels erhalten können. Bedingt durch die Querschnittsform der flachen Mulden des Estrichbelages ist sichergestellt, daß beim Betrieb der Flüssigkeitsflächenheizung keine unerwünschten und für die Heizrohre gefährlichen Risse in der Estrichschicht auftreten.

Das Halten der Heizrohre in den Mulden der Elemente im Abstand vom Muldenboden kann zweckmäßig mittels Stützen erfolgen, die aus Metall oder Kunststoff gefertigte Klemmhalter sind.

Nachfolgend wird ein Ausführungsbeispiel ei-ner erfindungsgemäß ausgebildeten Flüssigkeits-flächenheizung anhand der beiliegenden Zeich-nung näher erläutert.

Im einzelnen zeigen :

Figur 1  eine Draufsicht auf zwei vorgefertigte, verlegte und sich überlappende, wärmeisolierende Elemente, aus denen die Fußbodengrundschicht gebildet ist ; mit eingesetzten Heizrohren der Flüssigkeitsflächenheizung ;

Figur 2  einen Schnitt durch das Element ent-lang der Linie II-II in Fig. 1 und mit angedeuteter aufgebrachter Estrichschicht.

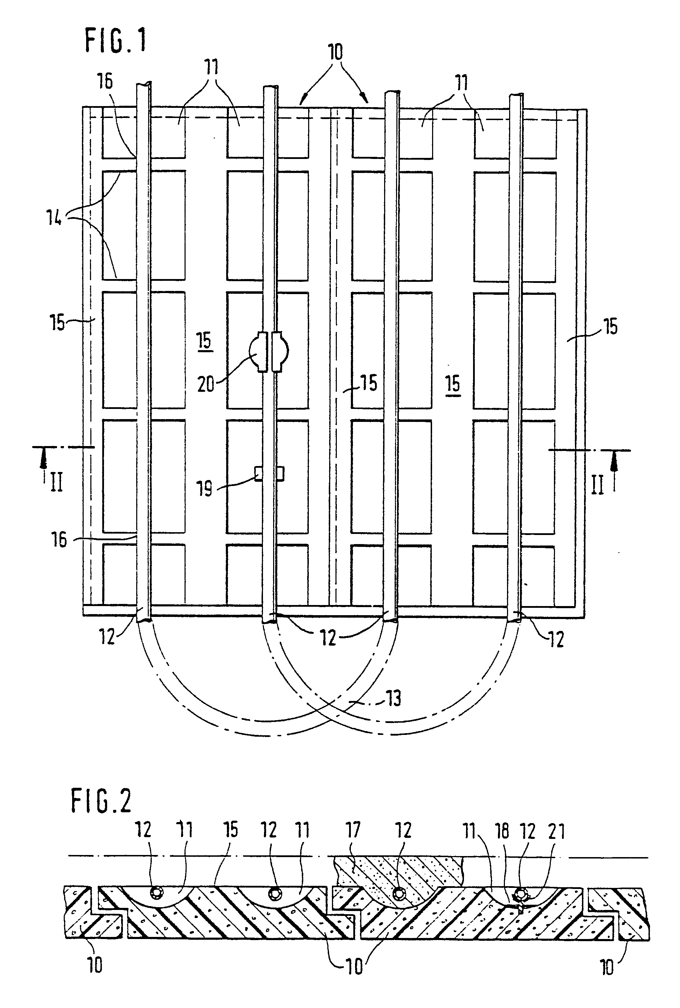

Die Zeichnung zeigt zwei plattenförmige, aus aufgeschäumtem Kunststoffmaterial gefertigte Elemente 10, die zusammen mit weiteren anstoßenden, gleichartigen Elementen 10 die wärmeisolierende Grundschicht eines Fußbodens mit Flüssigkeitsflächenheizung bilden. Die Oberseite jedes Elementes 10 ist je nach errechneter Verlegedichte der Heizrohre mit zwei oder drei parallelen muldenförmigen Kanälen 11 zur versenkten Anordnung der Heizrohre 12 versehen. Die Heizrohre 12 sind mäanderförmig oder bifilar im Fußboden verlegt, beispielsweise entsprechend der in der DE-B-2 248 228 beschriebenen Art. In Fig. 1 sind zwei Randverbindungsbogen 13 zwischen zwei längsgerichteten Abschnitten der Heizrohre 12 mit strichpunktierten Linien angedeutet.

Die muldenförmigen Längskanäle 11 sind durch im Element 10 ausgebildete Querstege 14 in Abständen unterbrochen, die zusammen mit den zwischen den muldenförmigen Kanälen 11 befindlichen durchgehenden Längsstegen 15 die obere Begrenzungsebene des Elementes 10 bilden. In diesen Querstegen 14 sind Schlitze 16 ausgebildet, in welche die Heizrohre 12 eingeklemmt und im Abstand vom Boden der muldenförmigen Kanäle 11 gehalten sind, wie das Schnittbild der Fig. 2 erkennen läßt.

In Fig. 2 ist die nachträglich aufgebrachte Estrichschicht 17 des Fußbodens im Bereich eines der muldenförmigen Längskanäle 11 schraffiert dargestellt. Die Darstellung läßt erkennen, wie das im muldenförmigen Längskanal versenkt angeordnete Heizrohr 12 von der Estrichmasse allseitig umschlossen wird, welche den gesamten Kanalbereich zwischen den einzelnen Querstegen 14 der Elemente 10 ausfüllt.

Die Zeichnung ist nicht maßstabsgetreu dargestellt. So müssen die Querstege 14 nicht die aus Fig. 1 ersichtliche relativ große Breite haben und können auch durch einfache Distanzhalter ersetzt sein. In Fig. 2 ist im rechten muldenförmigen Längskanal 11 ein solcher Distanzhalter 21 in Form eines metallischen Steckhalters dargestellt, der in einer Haltegabel für das Heizrohr 12 endet und einen Kragen 18 zur Auflage und Abstützung auf dem Boden des muldenförmigen Kanales 11 aufweist. Anstelle des Distanzhalters 18 kann der erforderliche Abstand der Heizrohre 12 vom Boden der muldenförmigen Kanäle 11 auch durch einfache Unterlegstücke 19 oder durch in die Platte eingeschäumte Rohrklemmen 20 eingehalten werden, von denen Ausführungsbeispiele in Fig. 1 eingezeichnet sind.

**Patentansprüche**

1. Flüssigkeitsflächenheizung für Fußböden mit bifilar oder mäanderförmig verlegten Heizrohren (12), die in offenen und mit Estrich ausfüllbaren konkaven Kanälen (11) von aus wärmeisolierendem Material vorgefertigten Elementen (10) so verlegt sind, daß sie unterhalb der oberen Abschlußebene der Elemente (10) verlaufen, dadurch gekennzeichnet, daß die mit einem konkav gekrümmten Boden versehenen Kanäle (11) als wärmeleitblechfreie Mulden ausgebildet sind, deren Breite größer ist als die Breite der zwischen den Mulden verbleibenden Längsstege (15), und daß die Heizrohre (12) in den Kanälen (11) auf in den Elementen verankerten Stützen (20, 21) in an sich bekannter Weise mit Abstand vom Muldenboden und vom Estrich allseitig umschließbar gehalten sind.

2. Flüssigkeitsflächenheizung nach Anspruch 1, dadurch gekennzeichnet, daß die Stützen aus Metall oder Kunststoff gefertigte Klemmhalter (20, 21) sind.

**Claims**

1. Liquid under floor heating with heating pipes 12 which are laid in bifilar or meander-shaped manner and are so laid in open concave channels 11 of elements 10 prefabricated from heat-insulating material such that they extend underneath the upper sealing plane of the elements 10, which channels can be filled with floor gypsum, characterised in that the channels 11 provided with a concavely curved base are designed as troughs which are free from heat conducting plates and the width of which is greater than the width of the longitudinal webs 15 remaining between the troughs, and in that the heating pipes 12 are held in the channels 11 on supports 20, 21 anchored in the elements, in known « per se » manner at a spacing from the trough base and so that they can be surrounded on all sides by the floor gypsum.

2. A liquid surface heating according to claim 1, characterised in that the supports are clamping holders 20, 21 made from metal or plastic material.

## Revendications

1. Système de chauffage sur surfaces étendues par un fluide pour les sols, comprenant des tubes de chauffage (12) posés de manière bifilaire ou en forme de méandres, disposés dans des conduites (11) concaves ouvertes et composées d'éléments (10) préfabriqués en matériau calorifuge pouvant être comblées de ciment, de telle sorte qu'ils se trouvent en dessous de la surface de fermeture supérieure des éléments, caractérisé en ce que les conduites (11) munies d'un fond à courbure concave sont conçues en tant que cavités sans plaques conductrices, dont la largeur est supérieure à la largeur des travées longitudinales (15) restant entre ces cavités, et les tubes de chauffage (12) sont maintenus dans les conduites (11) sur des supports (20, 21) fixés dans les éléments d'une manière connue à une certaine distance du fond des cavités et peuvent être entourés de ciment de tous côtés.

2. Système de chauffage sur surfaces étendues par un fluide conforme à la revendication 1, caractérisé en ce que les supports sont des supports de blocage (20, 21) réalisés en métal ou en matière plastique.

# FIG.1

# FIG.2